# EUROPÄISCHE PATENTSCHRIFT

(11) **EP 1 514 483 B1**
(45) Veröffentlichungstag und Bekanntmachung des Hinweises auf die Patenterteilung: **12.03.2008**
(21) Anmeldenummer: 03020646.0
(22) Anmeldetag: 11.09.2003
(51) Int. Cl.: A23P 1/08, A23L 1/00, A23L 1/318, A23B 4/26

(54) **Verfahren zum automatischen Auftragen einer viskosen Flüssigkeit auf stückiges Lebensmittelgut**
Process for automatic coating of food pieces with a viscous liquid
Procédé d'enrobage automatique des pièces de viandes avec une solution visqueuse

(43) Veröffentlichungstag der Anmeldung: 16.03.2005
(73) Patentinhaber: Hela Gewürzwerk, Hermann Laue GmbH & Co. KG, 22926 Ahrensburg (DE)
(72) Erfinder: Lüpke, Wolfried, 23843 Bad Oldesloe (DE)
(74) Vertreter: Fleck, Thomas

(56) Entgegenhaltungen:
- DE-C- 19 524 439
- GB-A- 639 695
- GB-A- 831 028
- GB-A- 2 034 572
- GB-A- 2 120 517
- US-A- 4 431 678
- US-A- 4 454 834
- PATENT ABSTRACTS OF JAPAN vol. 013, no. 466 (C-646), 20. Oktober 1989 (1989-10-20) & JP 01 181754 A (KISAKU SUZUKI), 19. Juli 1989 (1989-07-19)
- PATENT ABSTRACTS OF JAPAN vol. 2003, no. 11, 5. November 2003 (2003-11-05) -& JP 2003 180307 A (KOWA KOGYO:KK), 2. Juli 2003 (2003-07-02)
- PATENT ABSTRACTS OF JAPAN vol. 1999, no. 08, 30. Juni 1999 (1999-06-30) -& JP 11 056310 A (SUZUKI MAKOTO), 2. März 1999 (1999-03-02)
- PATENT ABSTRACTS OF JAPAN vol. 009, no. 301 (C-316), 28. November 1985 (1985-11-28) -& JP 60 141262 A (KAZUSAYA SHOJI KK), 26. Juli 1985 (1985-07-26)
- PATENT ABSTRACTS OF JAPAN vol. 013, no. 193 (M-822), 9. Mai 1989 (1989-05-09) -& JP 01 016678 A (KOMUKO SANGYO KK), 20. Januar 1989 (1989-01-20)

## Beschreibung

Die Erfindung betrifft ein Verfahren zum automatischen Auftragen einer viskosen Flüssigkeit, vorzugsweise einer Marinade, auf stückiges Lebensmittelgut gemäß dem Oberbegriff des Patentanspruchs 1.

Stückiges Lebensmittelgut im Sinne dieser Erfindung sind sämtliche Lebensmittel, die in Form von kompakten Stücken größerer Abmessungen vorliegen, insbesondere Fleisch (auch Preßfleisch oder Hackfleisch), Fisch, Tofustücke, Gemüsebratlinge und dergleichen.

Als viskose Flüssigkeiten werden hier zähfließende Flüssigkeiten bezeichnet, die eine deutlich höhere Viskosität haben als Wasser bei Normaltemperatur. Beispiele derartiger Flüssigkeiten sind Marinaden oder Speiseöle und andere flüssige

Speisefette.

In der Lebensmittelbranche ist es üblich, bspw. Fleisch oder Fisch mit Würzsoßen bzw. Marinaden zu behandeln, um diese Produkte bereits in der Verarbeitung mit bestimmten Würzen, aber auch mit Fetten und/oder Ölen zu versehen. So wird z.B. Grillfleisch mit verschiedenen Marinaden versehen und damit in unterschiedlichen Geschmacksrichtungen angeboten.

Eine "traditionelle" Möglichkeit, derartiges stückiges Lebensmittelgut zu marinieren bzw. mit anderen viskosen Flüssigkeiten zu versehen, besteht darin, entweder das Lebensmittelgut in einer mit der Flüssigkeit gefüllten Wanne über einen längeren Zeitraum einzulegen oder aber das Lebensmittelgut von Hand, z.B. mit einem Quast, mit der viskosen Flüssigkeit zu bestreichen. Diese Methoden sind aufwendig hinsichtlich Zeit und Personal. Sie können in größeren Lebensmittel verarbeitenden Betrieben nicht rational eingesetzt werden.

Es wurden auch bereits Vorrichtungen angegeben, mit denen das Marinieren von bspw. Fleisch einer gewissen Automatisierung zugänglich gemacht werden kann. Hierbei wird das zu marinierende Lebensmittelgut auf einer Fördereinrichtung unter eine Marinierstation gefahren, die dann von oben auf das Lebensmittelgut eine vorbestimmte Menge an Marinade auftropfen läßt. Diese Maschine arbeitet allerdings diskontinuierlich (der Fördervorgang für das Lebensmittelgut muß zum eigentlichen Marinieren angehalten werden) und die Marinade wird nur oberflächlich auf das Lebensmittelgut aufgebracht, anstelle in dieses "einmassiert" zu werden.

In der US 4,431,678 werden eine Vorrichtung und ein Verfahren offenbart, mit denen Schokolade mittels einer Auftragwalze auf offensichtlich empfindliches Lebensmittelgut aufgebracht wird. Bei diesem Verfahren kann ein inniger Kontakt zwischen der Auftragwalze und der Oberfläche des Lebensmittelgutes nicht erfolgen, um letzteres nicht zu beschädigen.

In der DE 195 24 439 C1 wird ein Mürbscheider mit Gewürzdosierung offenbart. Dort laufen zwei Messerwalzen mit ineinander greifenden Messern gegensinnig um, die zum Einschneiden und damit Mürbemachen von Fleisch und zugleich zum Gewürzauftrag verwendet werden. Um nicht zu verhaken, müssen diese Messerwalzen mit gleicher Winkelgeschwindigkeit rotieren.

Aus der GB 639,695 ist eine Vorrichtung zum Auftragen einer viskosen Flüssigkeit auf Lebensmittel mittels einer Auftragswalze bekannt. Insbesondere in Fig. 5 dieser Druckschrift ist zu erkennen, dass die Antriebe für eine dort mit der Bezugsziffer 80 bezeichnete Förderwalze wie auch für die Auftragwalze 36 über einen einzigen Riemen 46 von einem Motor 52 bewerkstelligt werden. Sie sind daher (mangels eines für eine der Walzen separat vorhandenen Getriebes) nicht individuell einstellbar.

Ausgehend von dem bekannten Verfahren zum Auftragen einer viskosen Flüssigkeit auf stückiges Lebensmittelgut soll mit der Erfindung ein Verfahren der eingangs genannten Art angegeben werden, mit dem das Auftragen der viskosen Flüssigkeit rational und kontinuierlich erfolgen kann, wobei die viskose Flüssigkeit möglichst intensiv mit der Oberfläche des stückigen Lebensmittelgutes in Kontakt geraten soll.

Diese Aufgabe wird mit einem in Anspruch 1 angegebenen Verfahren gelöst. Eine vorteilhafte Weiterbildung des Verfahrens ist in dem abhängigen Anspruch 2 angegeben.

Mit Hilfe einer Auftragwalze kann die viskose Flüssigkeit, bspw. eine Marinade, einfach und effektiv auf das stückige Lebensmittelgut aufgebracht werden. Auf die Manteloberfläche der Auftragwalze gelangt aus einem Reservoir die Flüssigkeit. Sie wird bei der Drehung der Auftragwalze mitgeführt und dann auf die Oberfläche des stückigen Lebensmittelgutes übertragen. Diese Art des Auftragens der viskosen Flüssigkeit verläuft zum einen automatisch, d.h. im wesentlichen ohne manuelle Bearbeitung, zum anderen kann sie in einem kontinuierlichen Verfahren und damit zeitsparend durchgeführt werden.

Dabei ist es für das mit dem erfindungsgemäßen Verfahren zu erzielende Ergebnis wichtig, dass wie gemäß der Erfindung vorgesehen zwischen der Auftragwalze und dem Lebensmittelgut eine Anpreßkraft ausgebildet wird. Dies kann in einer das Verfahren ausführenden Vorrichtung bspw. dadurch geschehen, daß die Fördereinrichtung elastisch ist und durch Nachgeben in Richtung radial zu der Auftragwalze eine Kraft in Richtung der Auftragwalze auf das Lebensmittelgut ausübt. Diese Konstruktion eignet sich besonders gut für Lebensmittelgut mit ungleichmäßiger Nachgiebigkeit, z.B. einem Kotelette mit nachgiebigem Fleisch und starrem Knochen. Gleichermaßen kann aber auch die Auftragwalze selbst in Richtung senkrecht zu der Fördereinrichtung bewegbar gelagert und mit einer Kraft in Richtung der Fördereinrichtung beaufschlagt sein. Diese Kraft kann im einfachsten Fall die von der Auftragwalze ausgeübte Gewichtskraft sein.

Als Fördereinrichtung wird bei einer das erfindungsgemäße Verfahren durchführenden Vorrichtung ein über Antriebs- bzw. Umlenkwalzen umlaufendes Endlosband bevorzugt. Dies kann bspw. in Form eines Metallgitters vorliegen, wird jedoch bevorzugt durch parallel angeordnete, elastische Kunststoffriemen gebildet. Elastische Kunststoffriemen bilden die gewünschte Anpreßkraft aus, wobei die Kraft abhängig vom Widerstand des Lebensmittelproduktes lokal variiert. Dies ist z.B. bei der Verarbeitung von Koteletts von Vorteil.

Dadurch dass das Lebensmittelgut wie mit dem erfindungsgemä-ßen Verfahren vorgesehen, unterhalb der angetriebenen Auftragwalze hinweg gefördert wird, kann durch unterschiedliche Wahl von Fördergeschwindigkeit und Umlaufgeschwindigkeit der Manteloberfläche der Auftragwalze die Menge der aufgetragenen viskosen Flüssigkeit bestimmt werden. Läuft die Auftragwalze langsamer als die Fördergeschwindigkeit wird wenig Flüssigkeit übertragen und umgekehrt. Zugleich ergibt sich bei unterschiedlichen Geschwindigkeiten ein "Klemmeffekt", der dabei unterstützt, die viskose Flüssigkeit in das Lebensmittelgut "einzumassieren".

Mit dem erfindungsgemäßen Verfahren und der Vorrichtung kann verschiedenstes stückiges Lebensmittelgut, wie Fleisch, Fisch oder Gemüsebratlinge, mit einer viskosen Flüssigkeit versehen werden. Das Lebensmittelgut kann dabei frisch, aber auch tief- oder halbgefroren verarbeitet werden.

Um das Lebensmittelgut von zwei Seiten mit der viskosen Flüssigkeit versehen zu können, wird eine Weiterbildung des Verfahrens gemäß Anspruch 2 bevorzugt. Bei einer entsprechend zur Durchführung eines solchen Verfahrens eingerichteten Vorrichtung können gleichermaßen in zwei Etagen zwei "Behandlungsstationen" aus jeweils einer Fördereinrichtung, einer Auftragwalze und einem Reservoir angeordnet sein. Nach Verlassen der ersten Behandlungsstation fällt das Lebensmittelgut in einer solchen Vorrichtung auf die Fördereinrichtung der zweiten Behandlungsstation. Dabei sollte der Aufbau der Vorrichtung so gestaltet sein (insbesondere die Höhendifferenz zwischen den beiden Fördereinrichtungen so gewählt), dass das Lebensmittelgut im Fall gewendet wird. Hierbei können zusätzlich Leitbleche in der Vorrichtung unterstützen. Am Ende der zweiten Behandlungsstation kann das Lebensmittelgut dann an andere Vorrichtungen zur Weiterverarbeitung (bspw. Verpackung) übergeben werden.

Die Verwendung einer Auftragwalze mit einer strukturierten Mantelfläche zur Durchführung des erfindungsgemäßen Verfahrens ermöglicht schließlich einen besonders guten Auftrag der viskosen Flüssigkeit. Zum einen kann sich in den Strukturen mehr Flüssigkeit verfangen, es wird mehr Flüssigkeit auf das Lebensmittelgut übertragen. Zum anderen drücken sich die Strukturen besonderst tief in das Lebensmittelgut ein und "massieren" die viskose Flüssigkeit gleichermaßen in dieses hinein. Die Art der Strukturierung kann je nach Art des Lebensmittelgutes (z.B. Fleisch oder Fisch) anders gewählt werden. Hierzu sind in einer das erfindungsgemäße Verfahren durchführenden Vorrichtung die Walzen vorzugsweise austauschbar. Über die Profiltiefe der Strukturierung kann auch die Menge der aufgetragenen viskosen Flüssigkeit beeinflußt werden. Je tiefer die Strukturierung ist, desto mehr Flüssigkeit wird von der Manteloberfläche der Auftragwalze mitgeführt und folglich auf das stückige Lebensmittelgut übertragen.

Weitere Vorteile und Merkmale der Erfindung ergeben sich aus der nachfolgenden Beschreibung eines Ausführungsbeispiels anhand der beigefügten Figuren. In den Figuren zeigen:
- Fig. 1: ein Beispiel für eine Vorrichtung zum automatischen Auftragen einer viskosen Flüssigkeit auf ein stückiges Lebensmittelgut nach dem erfindungsgemäßen Verfahren in perspektivischer Ansicht,
- Fig. 2: eine Seitenansicht der Vorrichtung aus Fig. 1 mit entfernten Schutzabdeckungen,
- Fig. 3: eine Aufsicht auf die Vorrichtung aus Fig. 1 mit entfernten Schutzabdeckungen,
- Fig. 4: eine perspektivische Ansicht der oberen, ersten Bearbeitungsstation der Vorrichtung aus Fig. 1,
- Fig. 5: die Bearbeitungsstation aus Fig. 4 in einer Seitenansicht,
- Fig. 6: eine Auftragwalze aus der Vorrichtung in drei verschiedenen Ansichten, nämlich in entlang der Längsachse geschnittener Ansicht (a), in Aufsicht (b) und in einer Seitenansicht (c), und

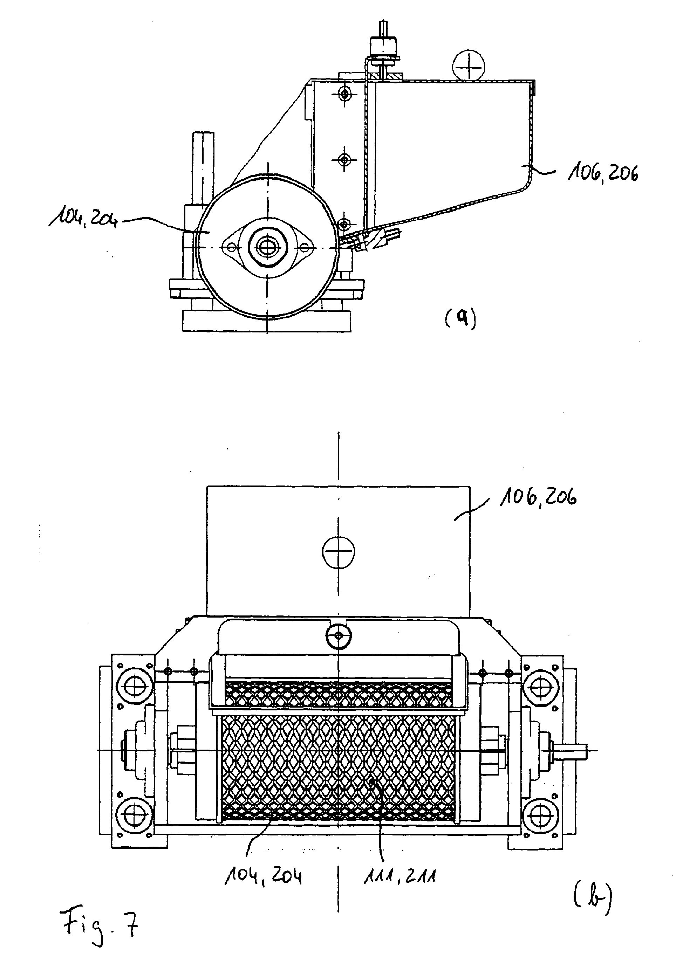

- Fig. 7: eine montierte Einheit aus Auftragwalze und Reservoir in zwei verschiedenen Ansichten, nämlich in teilweise geschnittener Seitenansicht (a) und in Aufsicht mit teilweise weggeschnittenem Reservoir (b) .

In den Figuren ist ein Beispiel für eine zur Durchführung des erfindungsgemäßen Verfahrens geeignete Vorrichtung dargestellt. Gleiche Elemente dieser Vorrichtung sind durchweg in allen Figuren mit gleichen Bezugszeichen versehen.

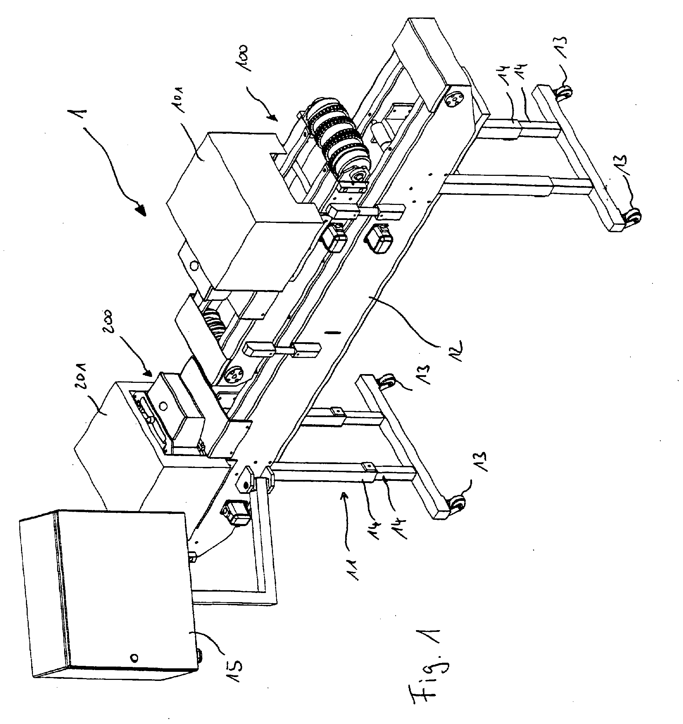

In den Figuren 1 bis 3 ist in drei verschiedenen Ansichten eine zur Durchführung des erfindungsgemäßen Verfahrens geeignete Vorrichtung 1 zum automatischen Auftragen einer viskosen Flüssigkeit auf stückiges Lebensmittelgut dargestellt. Die Vorrichtung 1 weist einen auf einem Maschinengestell 11 montierten Maschinenrahmen 12 auf.

Zum einfachen Umsetzen der Vorrichtung 1 sind an dem Maschinengestell 11 Rollen 13 angeordnet. Außerdem ist das Maschinengestell 11 vermittels ineinander verschiebbarer Rohre 14 in der Höhe verstellbar.

Auf dem Maschinenrahmen 12 sind übereinander zwei Bearbeitungsstationen 100, 200 angeordnet. In einem seitlich an dem Maschinenrahmen 12 angeordneten Gehäuse 15 ist die Steuerung untergebracht, auf die später noch Bezug genommen werden wird.

In Fig. 1 sind die Behandlungsstationen 100 bzw. 200 in wesentlichen Teilen von Abdeckungen 101 bzw. 201 verborgen. Diese Abdeckungen 101, 201 schirmen bewegte Maschinenteile ab, um die Gefahr von Verletzungen zu umgehen.

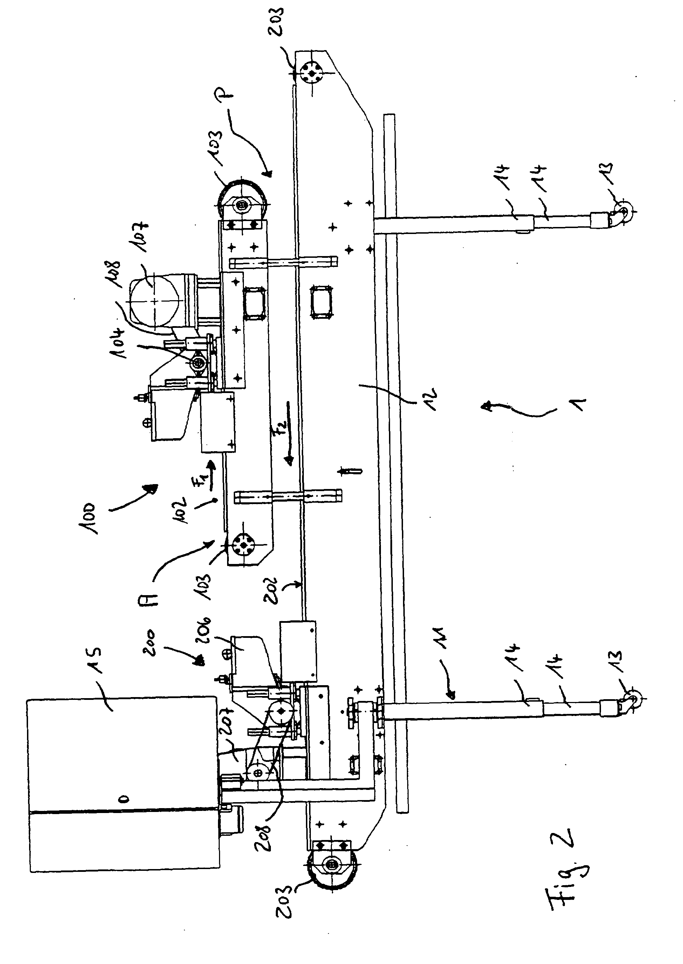

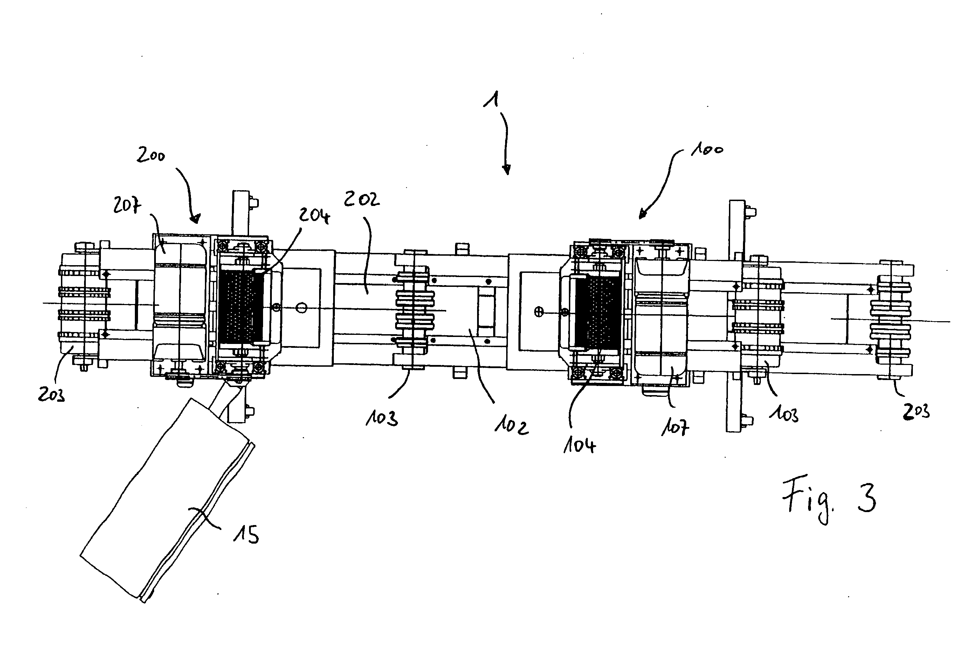

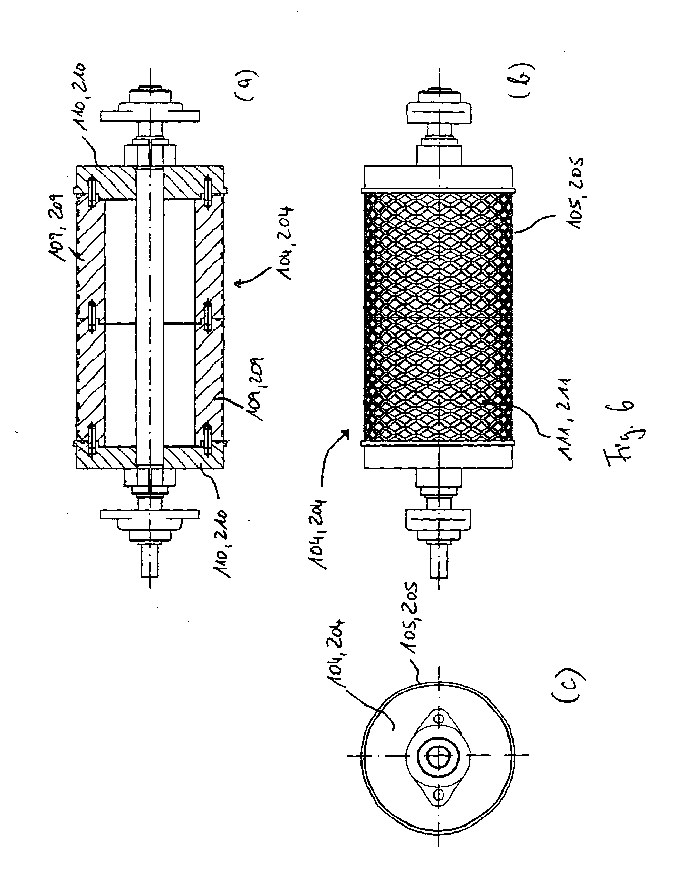

In den Figuren 2 und 3 sind die Abdeckungen 101 und 201 weggelassen. Die Behandlungsstationen werden daher anhand dieser Figuren weiter erläutert. Die Behandlungsstation 100 weist eine Fördereinrichtung 102 für das stückige Lebensmittelgut in Form eines um Umlenk- bzw. Antriebsrollen 103 umlaufenden Endlosbandes auf. Das Endlosband ist hier nicht dargestellt. Es ist bevorzugt durch mehrere in Längsrichtung der Fördereinrichtung 102 parallel angeordnete, elastische Kunststoffriemen gebildet. Oberhalb der Fördereinrichtung 102 befindet sich eine Auftragwalze 104, die eine Manteloberfläche 105 (Fig. 6(b)) aufweist. Oberhalb der Auftragwalze 104 ist ein Reservoir 106 angeordnet.

Die Fördereinrichtung wird über einen in einer der Antriebs- bzw. Umlenkrollen 103 angeordneten Trommelmotor angetrieben Trommelmotoren werden als Antriebe für die Fördereinrichtungen und Auftragwalzen bevorzugt, da diese ein geschlossenes System bilden. Dies erleichtert zum einen die Pflege und Reinigung der Vorrichtung 1. Zum anderen können aus diesen Motoren keine Schmierstoffe oder andere Substanzen austreten, die nicht auf die zu behandelnden Lebensmittel gelangen dürfen.

In den Figuren ist der Antrieb der Auftragwalze 104 als getrennt von der Auftragwalze 104 angeordneter Motor 107 dargestellt, von dem der Antrieb über einen Zahnriemen 108 auf die Auftragwalze übertragen wird, jedoch wird ein in der Antriebswalze 104 selbst angeordneter Trommelmotor gegenüber dem Motor 107 bevorzugt.

Die zweite Behandlungsstation 200, die im vertikalen Niveau unterhalb der ersten Behandlungsstation 100 angeordnet ist, ist ähnlich aufgebaut. Auch sie weist eine Fördereinrichtung 202 auf, die durch ein über Antriebs- bzw. Umlenkrollen 203 umlaufendes Endlosband gebildet ist. Auch hier befinden sich oberhalb der Fördereinrichtung 202 eine Auftragwalze 204 mit einer Manteloberfläche 205 (s. Fig. 6(b)), oberhalb derer ein Reservoir 206 angeordnet ist. Eine der Walzen 203 ist mittels eines Trommelmotors angetrieben. Auch für den Antrieb der Auftragwalze 204 wird anstelle des gezeigten Motors 207 und des Zahnriemens 208 ein Trommelmotor bevorzugt.

Die Fördereinrichtung 102 der ersten Behandlungsstation fördert zu behandelndes Lebensmittelgut in einer in Richtung des Pfeils F₁ verlaufenden Förderrichtung, die Fördereinrichtung 202 erstreckt sich bis über das in Förderrichtung F₁ gelegene Ende der Fördereinrichtung 102 hinaus und fördert das Lebensmittelgut in einer in Richtung des Pfeils F₂ verlaufenden zweiten Förderrichtung.

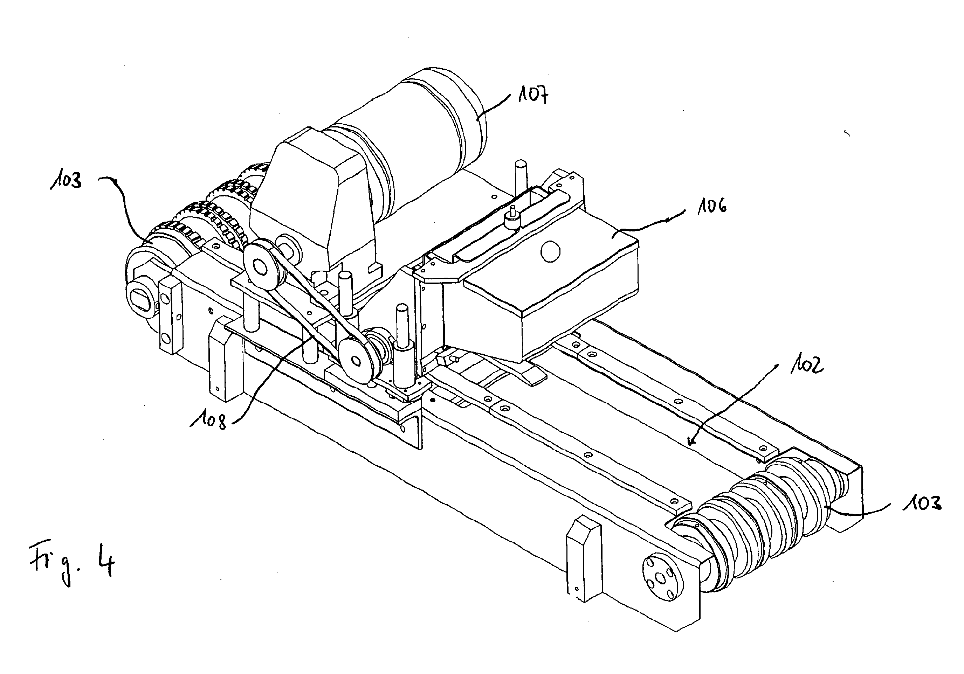

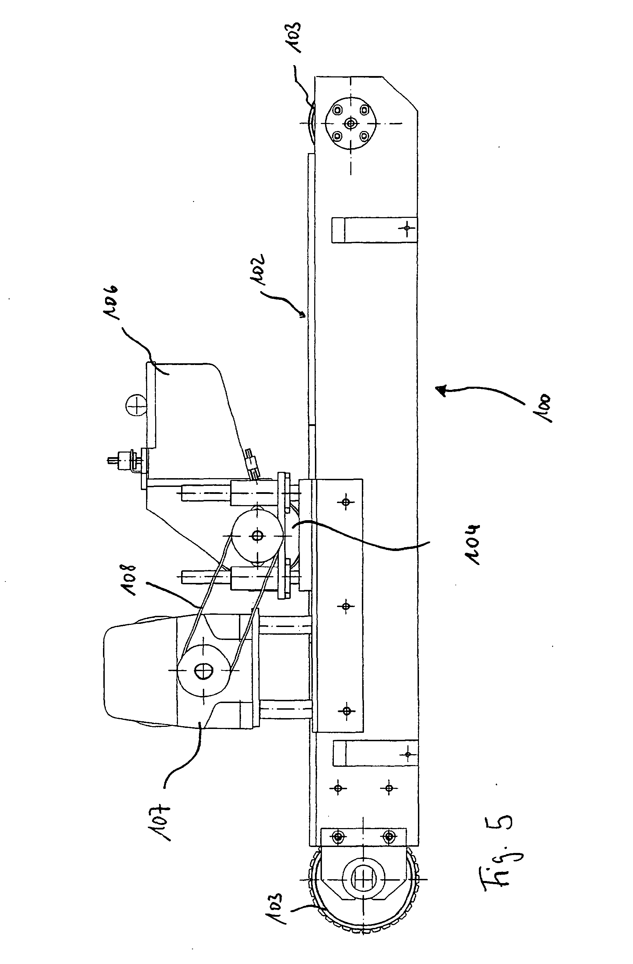

In den Figuren 4 und 5 sind vergrößerte Ansichten der ersten Behandlungsstation 100 dargestellt.

In Fig. 6 ist in drei verschiedenen Ansichten, in Fig. 6 (a) in entlang der Längsachse geschnittener Ansicht, in Fig. 6 (b) in Draufsicht und in Fig. 6 (c) in Seitenansicht, eine Auftragwalze 104 bzw. 204 gezeigt. Zu erkennen ist hier zum einen, daß die Auftragwalze 104, 204 segmentweise aufgebaut ist, nämlich aus einzelnen Zylindersegmenten 109, 209 und den Stirnplatten 110, 210. Auf diese Weise kann durch entsprechende Wahl der Anzahl der Zylindersegmente 109, 209 die Breite der Auftragwalze 104, 204 variiert werden. Zum anderen kann in dieser Figur gut gesehen werden, daß die Auftragwalze 104, 204 eine Strukturierung 111, 211 auf der Manteloberfläche 105, 205 aufweist. Die Strukturierung 111, 211 ist dreidimensional und weist in der Ausführungsform die Form von Rauten auf.

Die Vorrichtung 1 arbeitet zur Durchführung des erfindungsgemäßen Verfahrens wie folgt:

Stückiges Lebensmittelgut, bspw. Fleischstücke, wird an der Aufgabestelle A (Fig. 2) auf die Fördereinrichtung 102 der ersten Behandlungsstation 100 aufgegeben. Hier kann eine von einer anderen Verarbeitungsvorrichtung kommende Zufördereinrichtung münden, oder das Lebensmittelgut kann von Hand aufgelegt werden. Die Fördereinrichtung 102 befördert das Lebensmittelgut in der Förderrichtung F₁ bis unter die Auftragwalze 104. Zwischen Fördereinrichtung 102 und Auftragwalze 104 ist ein Spalt, durch den das Lebensmittelgut hindurch treten kann, wobei das Lebensmittelgut dabei in engen Kontakt mit der Manteloberfläche 105 der Auftragwalze 104 gelangt. Die Fördereinrichtung 102 hat in Förderrichtung F₁ verlaufende, elastische Kunststoffbänder, die für eine Andruckkraft zwischen Lebensmittelgut und Mantelfläche 105 sorgen.

Die Auftragwalze 104 rotiert, motorisch angetrieben, in einer solchen Richtung, daß mit der mit dem Lebensmittelgut in Kontakt stehende Abschnitt der Manteloberfläche 105 sich in derselben Richtung bewegt, wie die Fördereinrichtung 102. In Figur 2 dreht sich die Auftragwalze 104 also entgegen dem Uhrzeigersinn.

Bei der Rotation nimmt die Auftragwalze 104 mit ihrer strukturierten Manteloberfläche 105 aus dem Reservoir 106 viskose Flüssigkeit auf. Diese wird in den Vertiefungen der Strukturierung 111 mitgenommen. In den Figuren nicht bezeichnete Abstreifer bzw. Dichtlippen streifen überschüssige Flüssigkeit von der Manteloberfläche 105 ab und halten dies im Reservoir 106 zurück. Diese Dichtlippen verhindern zudem ein Auslaufen des Reservoirs 106 durch den zwischen Reservoir 106 und Manteloberfläche 105 belassenen Spalt.

Kommt die so mit der viskosen Flüssigkeit versehene Manteloberfläche 105 mit dem stückigen Lebensmittelgut, wie oben beschrieben in Kontakt, wird die viskose Flüssigkeit auf die Oberfläche des stückigen Lebensmittelgutes übertragen. Durch die Andrückkraft wird die viskose Flüssigkeit innig in das stückige Lebensmittelgut eingedrückt.

Mit Hilfe der in dem Gehäuse 15 angeordneten Steuerung lassen sich die Geschwindigkeiten der Antriebe für die Fördereinrichtung 102 und die Auftragwalze 104 getrennt einstellen (dies gilt auch für die Fördereinrichtung 202 und die Auftragwalze 204). Durch Wahl der Antriebsgeschwindigkeiten kann die Menge der aufgetragenen Flüssigkeit bestimmt werden.

Nachdem das stückige Lebensmittelgut unter der Auftragwalze 104 hindurch gefördert worden ist, gelangt es zu der Übergabestelle P (Fig. 2). Hier fällt es von der Fördereinrichtung 102 der ersten Behandlungsstation 100 auf die darunter befindliche Fördereinrichtung 202 der zweiten Behandlungsstation 200. Bei diesem Fall wird das Lebensmittelgut um 180° gewendet.

Auf der Fördereinrichtung 202 wird das Lebensmittelgut nun in Richtung der Förderrichtung F₂ zu der Auftragwalze 204 gefördert. Dort wird in analoger Weise wie oben anhand der Behandlungsstation 100 beschrieben viskose Flüssigkeit auf die andere Seite des stückigen Lebensmittelgutes aufgebracht. Hinter der Auftragwalze 202 verläßt das Lebensmittelgut schließlich die Vorrichtung 1. An dieser Stelle kann sich auch eine weitere Fördereinrichtung anschließen, um das Lebensmittelgut einer weiteren Verarbeitung, bspw. in einer Verpackungsvorrichtung, zuzuführen.

Mit dem unter Bezugnahme auf die hier dargestellte Vorrichtung 1 beschriebenen, erfindungsgemäßen Verfahren kann einfach und schnell automatisch eine viskose Flüssigkeit auf stückiges Lebensmittelgut aufgetragen werden. Der Auftrag kann dabei in einem kontinuierlichen Vorgang erfolgen, wobei die viskose Flüssigkeit mit der Oberfläche des Lebensmittelgutes in innigen Kontakt gebracht wird.

### Bezugszeichenliste

| | | | |
|---|---|---|---|
| 1 | Vorrichtung | 11 | Maschinengestell |
| 12 | Maschinenrahmen | 13 | Rolle |
| 14 | Rohr | 15 | Gehäuse |
| | | | |
| 100 | Behandlungsstation | 200 | Behandlungsstation |
| 101 | Abdeckung | 201 | Abdeckung |
| 102 | Fördereinrichtung | 202 | Fördereinrichtung |
| 103 | Antriebs- bzw. Umlenkrolle | 203 | Antriebs- bzw. Umlenkrolle |
| | | | |
| 104 | Auftragwalze | 204 | Auftragwalze |
| 105 | Manteloberfläche | 205 | Manteloberfläche |
| 106 | Reservoir | 206 | Reservoir |
| 107 | Motor | 207 | Motor |
| 108 | Zahnriemen | 208 | Zahnriemen |
| 109 | Zylindersegment | 209 | Zylindersegment |
| 110 | Stirnplatte | 210 | Stirnplatte |
| 111 | Strukturierung | 211 | Strukturierung |
| | | | |
| F₁ | Förderrichtung | F₂ | Förderrichtung |
| A | Aufgabestelle | P | Übergabestelle |

## Patentansprüche

1. Verfahren zum automatischen Auftragen einer viskosen Flüssigkeit, vorzugsweise einer Marinade, auf stückiges Lebensmittelgut, bei dem die viskose Flüssigkeit auf die Manteloberfläche (105, 205) einer Auftragwalze (104, 204) aufgebracht und die so mit der viskosen Flüssigkeit versehene Manteloberfläche (105, 205) zur Übertragung der Flüssigkeit über das stückige Lebensmittelgut gerollt wird, wobei die Auftragwalze (104, 204) zur Rotation angetrieben und gleichzeitig das stückige Lebensmittelgut unter der rotierenden Auftragwalze (104, 204) hinweg gefördert wird
**dadurch gekennzeichnet,**
**daß** die Fördergeschwindigkeit des stückigen Lebensmittelgutes von der Umlaufgeschwindigkeit der Manteloberfläche (105, 205) der Auftragwalze (104, 204) abweicht und zugleich während des Abrollens der Auftragwalze (104, 204) auf die Auftragwalze (104, 204) und/oder das stückige Lebensmittelgut eine auf das jeweils andere Element hin gerichtete Anpresskraft ausgeübt wird.

2. Verfahren nach Anspruch 1, **dadurch gekennzeichnet, daß** das stückige Lebensmittelgut nach dem Auftragen der viskosen Flüssigkeit auf eine seiner Oberflächen gewendet und die viskose Flüssigkeit mit Hilfe einer Auftragwalze (104, 204) auch auf eine der ersten Oberfläche gegenüberliegende Fläche des stückigen Lebensmittelgutes aufgebracht wird.

## Claims

1. Process for the automatic coating with a viscous liquid, preferably a marinade, of food pieces, in which the viscous liquid is applied to the circumferential surface (105, 205) of a coating roll (104, 204) and the circumferential surface (105, 205) coated in this way with the viscous liquid is rolled over the food-pieces to transfer the liquid, the coating roll (104, 204) being rotated and simultaneously the food pieces are conveyed under and beyond the coating roll (104, 204), **characterized in that** the conveying speed of the food pieces is different to the rotation speed of the circumferential surface (105, 205) of the coating roll (104, 204) and during the rolling of the coating roll (104, 204) on said coating roll (104, 204) and/or the food pieces is exerted a contact pressure directed at the in each case other element.

2. Process according to claim 1, **characterized in that**, following the coating of one of its surfaces with the viscous liquid, the food pieces are turned over and, with the aid of a coating roll (104, 204), the viscous liquid is also applied to a surface of the food pieces opposite to the first surface.

## Revendications

1. Procédé d'application automatique d'un liquide visqueux, de préférence une marinade, sur des produits alimentaires en morceaux, dans le cadre duquel le liquide visqueux est appliqué sur la surface enveloppe (105, 205) d'un cylindre d'application (104, 204) et la surface enveloppe (105, 205) ainsi pourvue du liquide visqueux est enroulée pour transférer le liquide visqueux sur les produits alimentaires en morceaux, le cylindre d'application (104, 204) étant entraîné pour la rotation et les produits alimentaires en morceaux étant transportés en même temps sous le cylindre d'application (104, 204) en rotation,
**caractérisé en ce**
**que** la vitesse de transport des produits alimentaires en morceaux diverge de la vitesse de rotation de la surface enveloppe (105, 205) du cylindre d'application (104, 204), et en ce qu'en même temps pendant le roulement du cylindre d'application (104, 204), une force de pression dirigée vers respectivement l'autre élément est exercée sur le cylindre d'application (104, 204) et/ou les produits alimentaires en morceaux.

2. Procédé selon la revendication 1, **caractérisé en ce que** les produits alimentaires en morceaux sont retournés sur une de leurs surfaces après application du liquide visqueux, et **en ce que** le liquide visqueux est appliqué à l'aide d'un cylindre d'application (104, 204) également sur une surface des produits alimentaires en morceaux opposée à la première surface.
